Europäisches Patentamt

European Patent Office

Office européen des brevets

(11) Publication number : **0 481 773 A1**

## (12) EUROPEAN PATENT APPLICATION

(21) Application number : **91309561.8**

(22) Date of filing : **17.10.91**

(51) Int. Cl.⁵ : **H02P 7/638, H02P 7/08**

(30) Priority : **19.10.90 US 599875**

(43) Date of publication of application :
**22.04.92 Bulletin 92/17**

(84) Designated Contracting States :
**AT BE CH DE DK ES FR GB GR IT LI LU NL SE**

(71) Applicant : **Yang, Tai-Her**
**Giant Lion Know-how Company, P.O. Box
84-85**
**Taipei (TW)**

(72) Inventor : **Yang, Tai-Her**
**Giant Lion Know-how Company, P.O. Box
84-85**
**Taipei (TW)**

(74) Representative : **Arthur, Bryan Edward et al**
**Withers & Rogers 4 Dyer's Buildings Holborn**
**London EC1N 2JT (GB)**

(54) **Improvement of series-excitation motor speed control circuit.**

(57) This invention relates to a series excitation motor speed control circruit that can choose the operation of alternating current double-speed motors between high speed operation and limited speed operation. The improved circuit is characterised by the use of switch SW1 to control the positive bias diode assembly which is connected in parallel to the two ends of series-excitation armature so as to produce series-excitation free operation of motor assembly, switch SW1 can also be connected to armature in parallel to control the operation speed by armature negative potential. The above mentioned positive bias diode assembly can further be connected to current limiter element in series.

FIG. 1

EP 0 481 773 A1

BACKGROUND OF THE INVENTION

Traditional series-excitation motors usually run freely at high speed. But in actual application, the needs for low speed operation are often felt. The present invention is characterized by the use of a switch connected in parallel to the bilateral bias components situated at both sides of armature gate assembly so that operators can choose to run the motor at free high speed or at limited speed.

SUMMARY OF THE INVENTION

The present invention relates to a series excitation motor speed control circuit to which a switch is connected to allow operators to choose to run series-excitation motor at high speed or low speed according to their needs.

BRIEF DESCRIPTION OF THE DRAWING

Fig. 1 is the bilateral bias diode assembly circuit, in which the two poles of a bridge circuit are connected to the diode assembly in positive series.

Fig. 2 is the bilateral bias diode assembly circuit, in which two diode assemblies are connected in reverse parallel.

Fig. 3. is the bilateral bias diode assembly circuit, which is formed by bilateral Zener diode assembly.

DETAILED DESCRIPTION OF THE INVENTION

In daily life, series-excitation motors are often used to drive all kinds of machines, tools or small apliances, and series-excitation motors usually run freely at high speed. In some applications, the operation speed of series-excitation motors are further changed by changing power voltage, series seepdown elements or the ratio between magnetic field and armature gate assembly. But series-excitation motors are characterized by no-load high speed free operation, which makes it impossible to change their light load high speed free operation by the abovementioned ways. Of course, we can use traditional speed limited circuit to control the motor operation speed no matter the load is light or heavy, but pratically, we often need to use its high speed free operation and speed limited operation. The present invention relates to the improvement of the alternating current double-speed motor operating circuits that can switch the motor operation between high speed and limited speed.

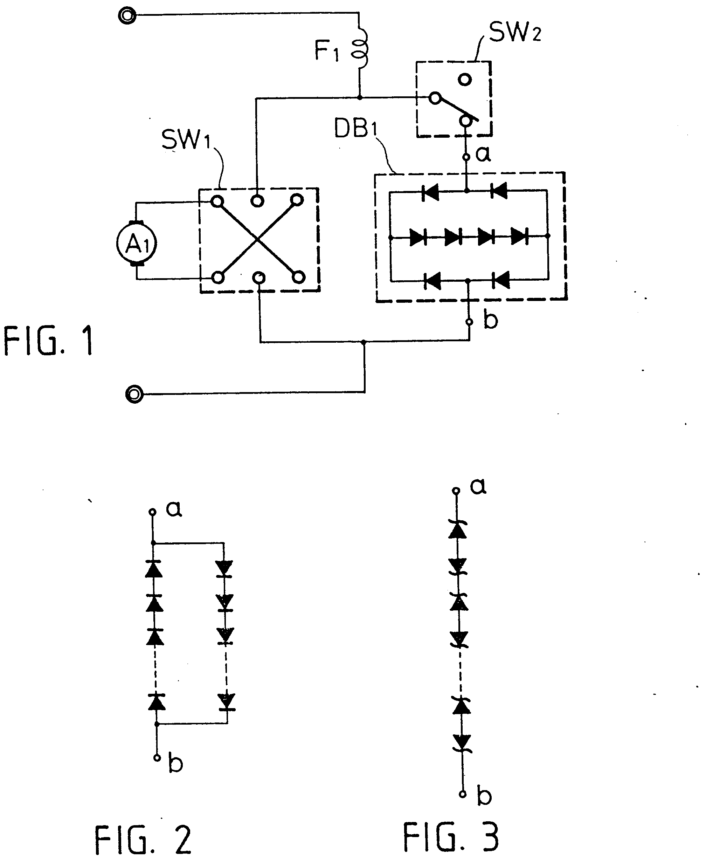

Fig. 1 shows one of the applications of the improved alternating current double-speed motor operating circuit that can choose high speed operation and limited speed operation. The circuit includes mainly --- series-excitation motor assembly, magnetic field F1 and armature A1, of which armature A1 is controlled by positive-reverse rotation switch SW1 and connected to magnetic field F1 in series;--- bilateral diode assembly DB1 is connected to selection switch SW2 in series and then connected in parallel to the two common joints of direction switch SW1. The feature of the circuit is that through the switching on and off of SW2, motors can be changed from high speed free operation to limited speed operation, which means the circuit constitutes an improvement of series-excitation motor speed control circuit that can choose the operation of alternating current double-speed motors between high speed operation and limited speed operation. The circuit is characterized by the use of switch SW1 to control the positive bias diode assembly which is connected in parallel to the two ends of series-excitation armature so as to produce series-excitation free operation of motor assembly, switch SW1 can also be connected to armature in parallel to control the operation speed by armature negative potential. The above mentioned positive bias diode assembly can further be conneced to current limiter element in series.

The above mentioned bilateral diode assembly can be formed by bridge circuit of which the two poles are connected in positive series to diode assembly as in Fig. 1, or by two diode assemblies connected in reverse parallel as in Fig. 2, or by bilateral Zener diode assembly as in Fig. 3. Motor operations are determined by the on and off of the circuit between diode assembly and positive or negative pole. The rated value of armature negative potential is changed through the choice of connecting poles of each diode assembly.

**Claims**

1. An improvement of series-excitation motor speed control circuit that can choose the operation of alternating current double-speed motors between high speed operation and limited speed operation. The improved circuit is characterized by the use of switch SW1 to control the positive bias diode assembly which is connected in parallel to the two ends of series-excitation armature so as to produce series-excitation free operation of motor assembly, switch SW1 can also be connected to armature in parallel to control the operation speed by armature negative potential. The above mentioned positive bias diode assembly can further be conneced to current limiter element in series.

2. The improved circuit prescribed in Claim 1 can be formed by bridge circuit of which the two poles are connected in positive series to diode assembly, or by two diode assemblies connected in reverse parallel , or by bilateral Zener diode assembly .

Motor operations are determined by the on and off of the circuit between diode assembly and positive or negative pole. The rated value of armature negative potential is changed through the choice of connecting poles of each diode assembly.

FIG. 1

FIG. 2

FIG. 3

4

European Patent
Office

**EUROPEAN SEARCH REPORT**

Application Number

EP    91 30 9561

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | GB-A-2 129 731 (SANYO ELECTRIC COMPANY LTD.) 23 May 1984 <br> * page 2, line 56 - page 3, line 13; figure 3 * <br> --- | 1,2 | H02P7/638 <br> H02P7/08 |
| Y | DE-A-3 200 753 (AKO-WERKE GMBH) 21 July 1983 <br> * abstract; figure * <br> ----- | 1,2 | |
| | | | **TECHNICAL FIELDS SEARCHED (Int. Cl.5 )** |
| | | | H02P <br> B60L |

The present search report has been drawn up for all claims

| Place of search | Date of completion of the search | Examiner |
|---|---|---|
| THE HAGUE | 09 JANUARY 1992 | BOURBON R. |

EPO FORM 1503 03.82 (P0401)